**Europäisches Patentamt**

(19) **European Patent Office**

**Office européen des brevets**

(11) Numéro de publication: **0 137 087**

**A1**

(12) # DEMANDE DE BREVET EUROPEEN

(21) Numéro de dépôt: **83401996.0**

(22) Date de dépôt: **13.10.83**

(51) Int. Cl.⁴: **A 01 K 61/00**

(43) Date de publication de la demande:
**17.04.85 Bulletin 85/16**

(84) Etats contractants désignés:
**DE FR GB IT NL SE**

(71) Demandeur: **Communal, Jean-Yves**
**L'oscollo**
**F-56760 Penestin(FR)**

(71) Demandeur: **Communal, Joel**
**Pen-Be**
**F-44410 Asserac(FR)**

(72) Inventeur: **Communal, Jean-Yves**
**L'oscollo**
**F-56760 Penestin(FR)**

(72) Inventeur: **Communal, Joel**
**Pen-Be**
**F-44410 Asserac(FR)**

(74) Mandataire: **Lemonnier, André**
**4 Boulevard Saint-Denis**
**F-75010 Paris(FR)**

(54) Procédé de mytiliculture et installation et flotteurs pour sa mise en oeuvre.

㊗ La présente invention concerne un procédé de mytilicul-ture en suspension et les installations pour sa mise en oeuvre.

Conformément à l'invention le support de fixation des moules est constitué par une nappe (2) qui est fixée de façon amovible sur un flotteur d'élevage en suspension (1) ayant un volume suffisant pour lui assurer une flottabilité positive égale à au moins le quart du poids des moules pouvant garnir, à maturité, les nappes qui y sont suspendues, par l'intermédiaire d'une traverse rigide (3) susceptible de porter la charge maximale correspondant à la nappe garnie de moules à maturité, des moyens étant prévus pour soustraire les nappes à une déformation résultant des mouvements de tangage du flotteur.

Grâce à l'invention la totalité du processus d'élevage, savoir le captage du naissain, l'élevage, la récolte par relèvement de la nappe et transport à un centre de dégrap-page est effectuée sur un même support facilement manipu-lable grâce à la traverse rigide.

Fig.1

EP 0 137 087 A1

1

## Procédé de mytiliculture et installation et flotteurs pour sa mise en oeuvre.

La présente invention concerne la mytiliculture. A l'heure actuelle, en dehors de la cueillette sur gisements naturels, on pratique essentiellement la culture sur bouchots et la culture en suspension. La culture sur bouchots nécessite des zones découvrantes, son extension se trouve donc obligatoirement limitée et, de plus, le travail sur les bouchots ne peut être exécuté que par basse mer de grande marée et quand le temps est favorable, ce qui réduit le temps de travail et nécessite un stockage pendant les périodes de mortes-eaux. En outre, dans les zones où on ne peut compter sur le captage naturel, il faut amener le naissain et le fixer sur les supports. La culture en suspension s'effectue sur des cordes. Dans les zones très abritées et sans marée comme l'étang de Thau, les cordes sont tendues entre des supports fixes. Dans les mers à marée, les cordes qui pendent verticalement sont accrochées sur des flotteurs ou des bateaux spécialement équipés. La culture en suspension ne peut se faire que dans des zones très abritées comme les rias espagnols ou les fjords norvégiens afin d'éviter que les cordes auxquelles est transmis le tangage des flotteurs, ne viennent se heurter, ce qui se traduit par le décrochage des moules. La mytiliculture sur cordes en mer à marée exige des fonds importants de l'ordre de onze mètres en dessous du zéro des cartes pour des cordes de neuf mètres et des sites parfaitement abrités qui en général ne sont pas disponibles en France. En outre les opérations de captage, d'élevage et de cueillette sur cordes sont des opérations longues et qui ne peuvent être mécanisées.

La présente invention a pour but de proposer un procédé de mytiliculture en suspension qui ne présente pas les sujétions et les inconvénients de la culture en suspension sur cordes.

On a déjà proposé dans FR-A-2 111 180 d'utiliser comme support pour l'élevage des coquillages des mats en non-tissés en fibres et/ou fils synthétiques fixés sur un radeau flottant mais, mis à part l'utilisation de ce matériau particulier, ce document ne suggère rien sur le procédé et les moyens pour mettre en oeuvre le procédé.

Une campagne de mytiliculture comporte trois phases distinctes qui sont le captage, l'élevage et la récolte, ces trois phases posant chacune des problèmes particuliers. Le captage ou fixation du naissain sur le support ne peut se faire que dans certaines zones jusqu'à une profondeur inférieure à six mètres et à certaines périodes de l'année. L'élevage se caractérise par un accroissement de la charge imposée au flotteur qui est égale à environ le quart du poids de la récolte, il peut se faire dans un beaucoup plus grand nombre de zones que le captage mais le support doit être protégé contre toute déformation brutale ou de courte période susceptible de détacher les moules du support. Enfin la récolte ne peut être mécanisée que si un support de surface importante, compatible avec les moyens mécaniques flottants de levage dont on dispose, peut être économiquement amené, avec son chargement de moules et sans qu'il y ait décrochage prématuré de la récolte, dans une station d'égrappage.

Les différents problèmes sont résolus conformément à l'invention par le fait que le support est constitué par une nappe qui est fixée de façon amovible sur un flotteur d'élevage en suspension ayant un volume suffisant pour lui assurer une flottabilité positive égale à au moins le quart du poids des moules pouvant garnir, à maturité, les nappes qui y sont suspendues par l'intermédiaire d'une traverse rigide susceptible de porter la charge maximale correspondant à la nappe garnie de moules à maturité.

Du fait de la fixation amovible sur le flotteur par l'intermédiaire d'une traverse rigide, il est possible de soulever la nappe par ladite traverse pour la transporter entre les opérations de captage, d'élevage et de récolte. Il est notamment possible d'effectuer le captage avec la nappe enroulée ou pliée sous la traverse et donc, soit avec la nappe disposée sur un support quelconque fixe ou flottant dans une zone totalement différente de la zone d'élevage, soit dans une zone quelconque avec un très grand nombre de nappes suspendues à un même flotteur d'élevage et/ou à un flotteur plus petit, le poids des nappes garnies de naissain étant négligeable par rapport à celui des nappes au moment de la récolte.

Pendant l'élevage il est indispensable de protéger la nappe contre les mouvements de tangage imposés à la traverse de suspension de la nappe.

Ceci peut être obtenu par plusieurs moyens :

La traverse peut être fixée de façon amovible mais rigide sur un flotteur longiligne rigide qui est lui-même rendu insensible au tangage, soit grâce à sa longueur qui est environ égale ou supérieure à deux fois la longueur d'onde de la houle observée au lieu d'implantation, soit en réduisant sa flottabilité positive pour qu'elle soit très faible par rapport à l'inertie de l'ensemble, soit enfin par immersion en dessous du niveau de répercussion de la houle.

La traverse peut, dans le cas où il peut subsister un certain tangage, être suspendue de façon amovible autour d'un point se trouvant sur l'axe vertical de la nappe.

L'immersion du flotteur en dessous du niveau de répercussion de la houle peut être obtenue par au moins deux corps morts amarrés de part et d'autre de son point milieu, la flottabilité négative des corps-morts excédant la flottabilité positive du flotteur et la longueur utile des amarres étant supérieure à la hauteur des nappes.

Conformément à l'invention et dans un tel cas le flotteur est amarré avec son axe parallèle à la direction des courants dominants. Ce mode de mise en oeuvre du procédé qui, du fait de l'absence du mouvement d'évitement des flotteurs, permet une implantation plus serrée, peut toutefois entraîner un gauchissement de la nappe dans les zones à fort courant de traverse.

Selon un autre mode de réalisation qui évite cet inconvénient, le flotteur amarré à une de ses extrémités, comporte des moyens permettant de faire varier sa flottabilité en fonction du développement des moules pour maintenir une flottabilité positive réduite. On sait en effet qu'un flotteur longiligne de grande inertie et à faible émergence ayant sensiblement la longueur de la houle n'est pas sensible au tangage.

Ce contrôle de la flottabilité peut être effectué, soit par ballastage, soit par des lests amovibles.

Selon une variante de réalisation du procédé on utilise un flotteur ballastable amarré à une de ses extrémités et immergé en dessous de la zone soumise à l'agitation de surface.

L'installation pour la mise en oeuvre de la phase d'élevage du procédé comporte essentiellement un flotteur longiligne de section suffisante pour assurer une flottabilité positive égale à au moins le quart du poids des moules pouvant garnir, à maturité, les nappes qui y sont suspendues, des nappes en un matériau souple fixées le long d'un de leurs bords sur une traverse rigide et des moyens situés sur les deux côtés latéraux du flotteur pour la solidarisation amovible d'une pluralité de traverses portant chacune une nappe avec le flotteur.

Selon une autre caractéristique les moyens de solidarisation assurent une solidarisation avec possibilité d'oscillation de la traverse autour d'un axe perpendiculaire à l'axe longitudinal du flotteur.

De préférence les nappes ont une longueur fonction des hauteurs d'eau minimales et des conditions climatiques, notamment de la luminosité en profondeur, au lieu d'élevage et leur surface est choisie en fonction des moyens de manutention disponibles et du poids envisagé de la récolte au mètre carré.

La nappe comporte de préférence un réseau constitué par des éléments verticaux mécaniquement résistants pour porter la charge réunis par des éléments transversaux horizontaux ou obliques. La constitution de la nappe en réseau assure un écartement quasi-constant entre les éléments verticaux du réseau dont la transversale supérieure solidaire de la traverse est rigide, la nappe étant de plus orientée avec son plan dans le courant, ce qui réduit la trainée d'ensemble. Les éléments transversaux peuvent être constitués par des barreaux plats espacés éventuellement rigides ou semi-rigides et fixés parallèlement entre eux sur les éléments verticaux de manière que la nappe puisse être enroulée, pliée ou entassée. La nature du matériau constitutif des barreaux et/ou de leur surface est choisie pour faciliter la fixation des moules.

Selon un mode de réalisation le flotteur longiligne rigide est subdivisé selon sa longueur en au moins deux compartiments formant ballasts avec des moyens pour introduire ou chasser l'eau de façon contrôlée de ces ballasts. Les moyens pour introduire ou chasser l'eau des ballasts peuvent être à contrôle manuel ou automatique.

Selon un autre mode de réalisation le flotteur longiligne rigide est muni de lests amovibles.

L'invention sera mieux comprise à la lecture de la description détaillée de divers modes de réalisation d'installations pour

la mise en oeuvre du procédé de mytiliculture en suspension conforme à l'invention, cette description étant faite avec référence aux dessins ci-annexés dans lesquels :

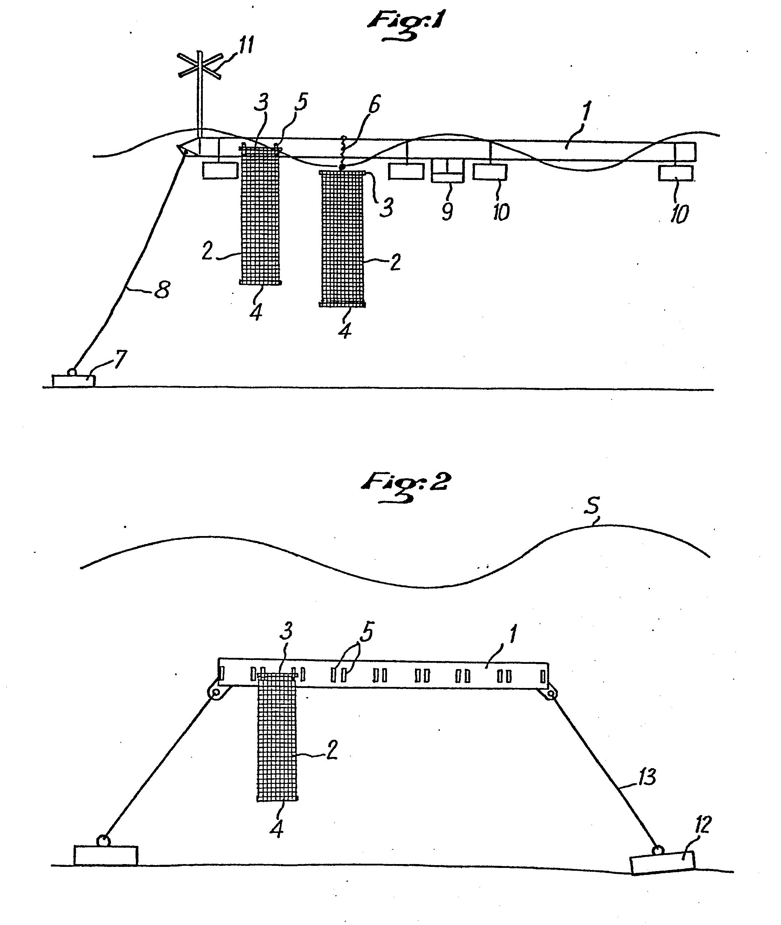

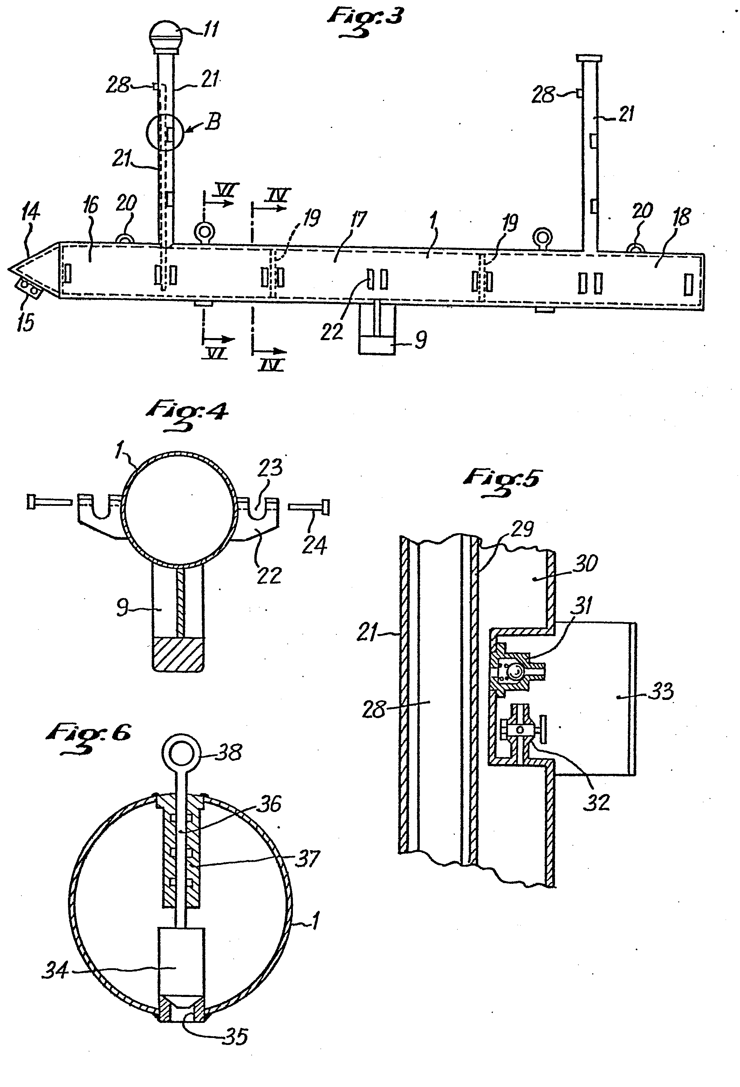

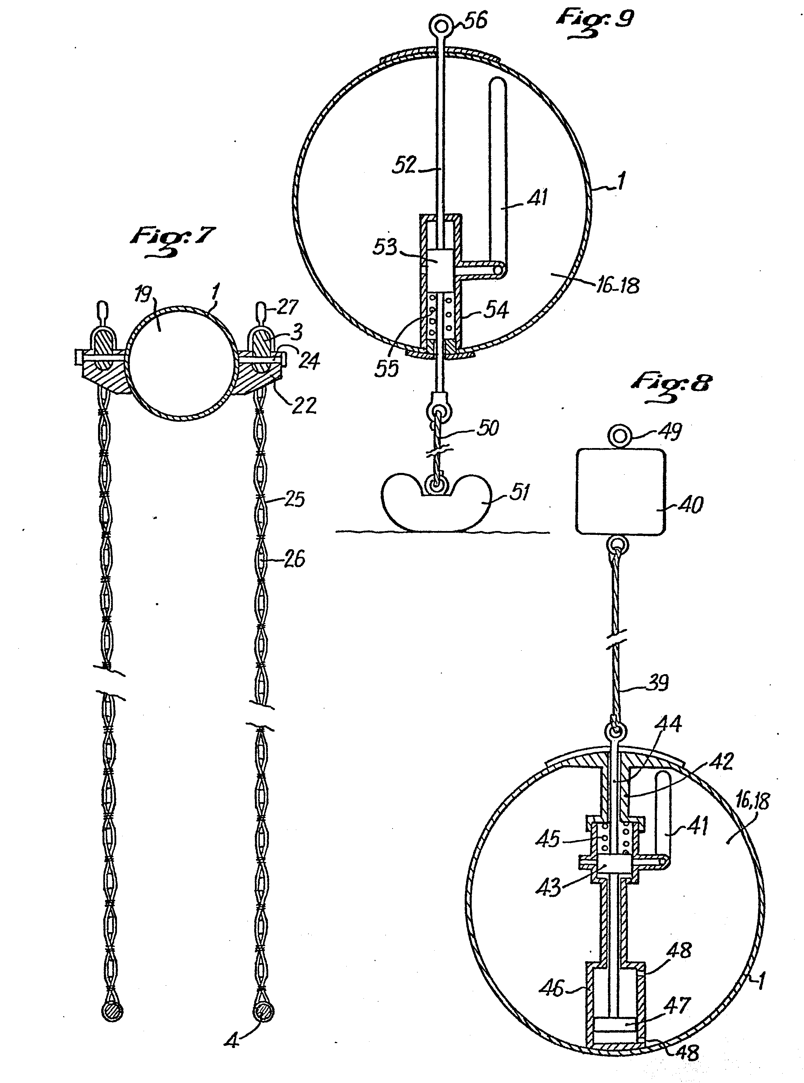

La figure 1 est une vue en élévation latérale schématique d'une installation de mytiliculture conforme à l'invention; la figure 2 est une vue correspondant à la figure 1 pour un autre type d'installation; la figure 3 est une vue en élévation d'un flotteur ballastable; la figure 4 est une vue en coupe par IV-IV de figure 3; la figure 5 est une vue en coupe de détail de B de figure 3; la figure 6 est une vue en coupe à plus grande échelle par VI-VI de figure 3; la figure 7 est une vue en coupe transversale du flotteur de figure 3 garni de ses nappes; la figure 8 est une vue en coupe d'un système de clapet automatique utilisable avec un flotteur de commande à flottabilité positive pour maintenir le flotteur avec une profondeur d'immersion constante et la figure 9 est une vue en coupe d'un système de clapet automatique utilisable avec un plomb de sonde pour maintenir le flotteur à une hauteur constante au-dessus du fond.

Dans les dessins la référence 1 désigne le flotteur dans son ensemble, 2 les nappes qui peuvent être constituées par des filets en corde, des mats textiles ou des réseaux d'éléments souples et rigides ou semi-rigides, 3 la traverse fixée sur le bord supérieur de chaque nappe et 4 la traverse formant lest prévue à la base de la nappe.

La traverse 3 peut être fixée rigidement sur le flotteur par deux dispositifs d'accrochage ouvrants 5 ou elle peut être suspendue en son centre par exemple à une chaîne 6 par un dispositif à crochet et anneau. Ce dernier dispositif est préférentiel lorsque le flotteur est susceptible de tanguer.

Les nappes 2 ont de préférence une largeur d'environ deux mètres et une longueur comprise entre cinq et dix mètres. Pour le captage les nappes peuvent être enroulées autour de la traverse 4, une pluralité de nappes enroulées étant suspendues les unes en dessous des autres. Pour l'élevage qui peut avoir lieu sur un site éloigné du site de captage, les nappes 2 sont suspendues les unes à côté des autres de part et d'autre du flotteur 1. Pour la récolte les nappes sont décrochées du flotteur et transportées à terre sur les lieux d'égrappage et de triage.

Le flotteur 1 a un diamètre fonction de la flottabilité à obtenir pour supporter la charge correspondant à un développement maximal des moules sur les deux séries de nappes latérales et ce diamètre est donc proportionnel à la longueur des nappes, longueur qui est elle-même fonction de la hauteur d'eau minimale et des conditions d'éclairement en profondeur et autres facteurs biologiques. La surface de la nappe doit rester dans les limites conditionnant les possibilités de manutention de la nappe garnie de moules. La longueur du flotteur peut être quelconque mais est de préférence supérieure à douze mètres pour accroître l'inertie de l'ensemble à l'agitation dans la zone d'immersion des nappes.

Dans le mode de réalisation de la figure 1, le flotteur 1 est amarré à une de ses extrémités sur un corps mort 7 par une amarre 8. Sa longueur est sensiblement égale à deux fois la longueur d'onde de la houle pour que la résultante des poussées d'Archimède sur les parties immergées passe sensiblement par le centre de gravité. Le flotteur est lesté par un lest 9 afin qu'il conserve une gîte modérée lors du retrait d'une seule nappe latérale. Des lests amovibles 10 peuvent être prévus pour réduire la flottabilité lorsque les nappes ne sont pas chargées de façon à réduire le roulis ou le tangage sous l'effet des vagues, ces lests étant retirés au fur et à mesure du développement des moules. La référence 11 désigne une balise de signalisation.

Dans le mode de réalisation de la figure 2, le flotteur 1 est ancré au fond à ses deux extrémités sur des corps morts 12 pour des amarres 13. Si la profondeur d'immersion est suffisante par rapport à la surface S des basses mers de vives eaux pour que la houle n'agisse pas sur le flotteur, les traverses 3 peuvent être fixées rigidement sur le flotteur par des dispositifs d'accrochage ouvrants 5.

Dans le mode de réalisation de la figure 3, les mêmes références désignent les mêmes éléments ou les éléments équivalents. Le flotteur 1 est du type ballastable et est équivalent dans son mode d'utilisation au flotteur à lests amovibles de la figure 1.

L'avant 14 du flotteur est profilé et par exemple conique et il est muni d'une plaque 15 d'amarrage pour une chaîne de corps morts de caractéristiques connues. Le flotteur est subdivisé en trois caissons 16, 17 et 18 par des cloisons 19. La référence 20 désigne des anneaux de manutention et 21 les mâts dont l'un est surmonté par la balise 11 de "danger isolé". 9 désigne le lest. 22 sont des oreilles latérales avec des encoches 23 pour la fixation des traverses des nappes et des goupilles 24 de sécurité, l'ensemble formant un dispositif d'accrochage ouvrant 5.

Comme illustré à la figure 7, les nappes 2 sont constituées par un réseau comportant dans cet exemple, des cordes verticales 25 portant des barreaux plats 26 qui peuvent être en bois ou en plastique. L'ensemble du réseau pourrait être constitué par un filet mais des éléments horizontaux plats et rigides accroissent la surface de fixation et la rigidité relative de la nappe tout en permettant de la plier, de l'enrouler ou de la déposer en tas. Le bord supérieur du filet est fixé sur une traverse 3 qui peut être engagée dans les encoches 23 de deux oreilles 22 et assujettie par les goupilles 24. La traverse 3 comporte des anneaux 27 pour la manutention de la nappe. Ces anneaux situés au centre peuvent également servir à la suspension de la nappe par les chaînes 6.

Le réglage de l'immersion du flotteur et le maintien de ce réglage au fur et à mesure de l'alourdissement des nappes par les moules qui s'y développent et dont le poids apparent est environ le quart de leur poids réel, seront décrits ci-après dans le cas du flotteur ballastable de la figure 3.

Selon un premier mode de réalisation purement manuel, un tube de chasse d'eau 28 descend jusqu'au fond de chacun des compartiments 16 et 18 qui constituent les ballasts, le compartiment 17 étant rempli d'air. Le mât est subdivisé par une paroi 29 pour réaliser une conduite 30 en communication avec la partie haute du compartiment formant ballast. Sur cette conduite 30 sont branchés, par exemple à diverses hauteurs pour faciliter les manoeuvres, un raccord 31 raccordable à la canalisation d'un compresseur ou autre source d'air comprimé analogue et un robinet vanne 32 permettant d'évacuer l'air du ballast. Le poste est protégé par une porte 33. Pour admettre l'eau dans le ballast, un clapet pesant 34 prend appui sur un siège 35 dans la partie basse de la paroi cylindrique 1 du flotteur. Ce clapet est solidaire d'une tige de levage 36 qui traverse la paroi du flotteur en étant guidée de façon étanche dans un manchon 37, un anneau de levage 38 étant prévu à son extrémité supérieure.

Pour immerger le flotteur et lui donner la flottabilité minimale en début de campagne, on ouvre le robinet vanne 32 et avec un filin accroché sur l'anneau 38, on soulève le clapet pesant 34. L'eau rentre dans le ballast en chassant l'air. Lorsque la flottabilité voulue est atteinte, on libère le clapet 34 et ferme le robinet vanne 32. Lorsque le flotteur tend à s'enfoncer en raison de l'accroissement du poids des moules développées sur les nappes 2, on raccorde une source d'air comprimé sur les raccords 31 et injecte dans chacun des ballasts 16 et 18 les volumes d'air voulus pour rétablir la flottabilité.

Dans les figures 8 et 9 on a illustré des systèmes de robinets-vannes automatiques pour rétablir la flottabilité lorsque le poids des moules tend à faire plonger le flotteur. Le dispositif de la figure 8 a pour but de maintenir le flotteur à une profondeur d'immersion fixée par la longueur du filin 39 d'amarrage du flotteur 40. Le compartiment 17 constitue dans ce cas une réserve d'air comprimé pour les deux ballasts constitués par les compartiments 16 et 18. Une canalisation d'air 41 est en communication avec l'admission du clapet à tiroir 42 dont le piston 43 est solidaire d'une tige 44 attelée au filin 39. Le piston 43 est sollicité en position d'obturation par un ressort 45 et amené en position d'ouverture par la traction exercée sur le filin 39 par le flotteur 40. Pour éviter l'ouverture du clapet sous l'effet de la houle et des vagues, la tige 44 se prolonge dans une chambre cylindrique 46 située au fond du flotteur et est solidaire d'un piston 47. La chambre 46 est en communication avec l'intérieur du flotteur 1 par deux petits orifices 48 à ses deux extrémités de sorte que le cylindre 46 et le piston 47 forment un amortisseur. Pour remonter le flotteur par exemple pour la récolte, on exerce une traction sur le filin 39 à l'aide de l'anneau 49 du flotteur 40, ce qui vide les ballasts. Il est évident que l'on conserve le robinet vanne 32, le tube d'évacuation 28 et le système de clapet 34-35 pour pouvoir, au départ de la campagne, immerger le flotteur et évacuer l'eau du ballast sous l'effet de la chasse par l'air comprimé.

Le dispositif de la figure 9 a pour but de maintenir le flotteur à une hauteur au-dessus du fond fixée par la longueur du filin 50 à l'extrémité duquel est fixé un plomb de sonde 51 prévu pour déraper facilement. Le filin 50 est amarré à l'anneau inférieur d'une tige 52 solidaire du piston 53 d'une vanne tiroir 54 dont le piston est sollicité à l'ouverture par un ressort 55 et à la fermeture, contre l'action de ce ressort, par la traction du plomb de sonde. Lorsque le flotteur s'enfonce, la traction du filin 50 est supprimée et le piston 53 remonte sous la poussée du ressort 55 pour libérer l'accès de l'air comprimé amené par la conduite 41. Le relevage du flotteur se fait en exerçant une traction sur la tige 52 par un cordage dormant solidaire d'un flotteur fixé sur l'anneau 56 à l'extrémité supérieure de la tige 52. Un tube de chasse et des moyens de contrôle

0137087

de l'entrée de l'eau dans les ballasts sont également prévus mais, au début de la phase d'élevage en immersion profonde, on donne au flotteur une flottabilité très négative qui est contrôlée par l'arrivée en contact des plombs de sonde 51 avec le fond.

1

0137087

Revendications

1. Un procédé de mytiliculture en suspension caractérisé en ce que le support est constitué par une nappe (2) qui est fixée de façon amovible sur un flotteur d'élevage en suspension (1) ayant un volume suffisant pour lui assurer une flottabilité positive égale à au moins le quart du poids des moules pouvant garnir, à maturité, les nappes qui y sont suspendues par l'intermédiaire d'une traverse rigide (3) susceptible de porter la charge maximale correspondant à la nappe garnie de moules à maturité.

2. Un procédé de mytiliculture en suspension selon la revendication 1, caractérisé en ce que la totalité du processus de mytiliculture en suspension s'effectue sur la même nappe savoir : le captage du naissain sur les sites de production, l'élevage en eau profonde jusqu'à la taille marchande, la récolte par relèvement de la nappe, le transport et le stockage jusqu'au dégrappage mécanique de la nappe.

3. Un procédé de mytiliculture en suspension selon la revendication 2, caractérisé en ce que, pour le captage du naissain, les nappes (2) sont enroulées ou pliées sous la traverse (3).

4. Un procédé de mytiliculture en suspension selon l'une quelconque des revendications 1 à 3, caractérisé en ce que, pour l'élevage, la traverse (3) est fixée de façon amovible mais rigide sur un flotteur longiligne rigide rendu insensible au tangage.

5. Un procédé de mytiliculture en suspension selon la revendication 4, caractérisé en ce que le flotteur (1) est rendu insensible au tangage en lui donnant une longueur environ égale ou supérieure à deux fois la longueur d'onde de la houle observée au lieu d'implantation.

6. Un procédé de mytiliculture en suspension selon la revendication 4, caractérisé en ce que le flotteur (1) est rendu insensible au tangage en contrôlant sa flottabilité manuellement ou automatiquement par ballastage (16-18) ou lests amovibles (10) au fur et à mesure du développement des moules pour que sa flottabilité positive soit très faible par rapport à l'inertie de l'ensemble.

7. Un procédé de mytiliculture en suspension selon la revendication 4, caractérisé en ce que le flotteur (1) est rendu insensible au tangage en immergeant le flotteur en dessous du niveau de répercussion de la houle par au moins deux corps morts (12) amarrés de part et d'autre de son point milieu, la flottabilité négative des corps-morts excédant la flottabilité positive du flotteur et la longueur utile des amarres (18) étant supérieure à la hauteur des nappes (2).

8. Un procédé de mytiliculture en suspension selon la revendication 4, caractérisé en ce que le flotteur (1) ballastable est amarré à une de ses extrémités et immergé en dessous de la zone soumise à l'agitation de surface.

9. Une installation pour la mise en oeuvre de la phase d'élevage du procédé selon l'une quelconque des revendications 1 à 8 ci-dessus, caractérisée en ce qu'elle comporte essentiellement un flotteur longiligne (1) de section suffisante pour assurer une flottabilité positive égale à au moins le quart du poids des moules pouvant garnir, à maturité, les nappes (2) qui y sont suspendues, des nappes en un matériau souple fixées le long d'un de leurs bords sur une traverse rigide (3) et des moyens (5,6) situés sur les deux côtés latéraux du flotteur pour la solidarisation

0137087

amovible d'une pluralité de traverses portant chacune une nappe avec le flotteur.

10. Une installation selon la revendication 9, caractérisée en ce que les moyens de solidarisation (6) assurent une solidarisation avec possibilité d'oscillation de la traverse (3) autour d'un axe perpendiculaire à l'axe longitudinal du flotteur (1).

11. Une installation selon l'une quelconque des revendications 9 et 10, caractérisée en ce que la nappe (2) est formée par un réseau constitué par des éléments verticaux (25) mécaniquement résistants pour porter la charge réunis par des éléments transversaux horizontaux ou obliques (26).

12. Une installation selon la revendication 9, caractérisée en ce que le flotteur longiligne rigide est subdivisé selon sa longueur en au moins deux compartiments (16, 18) formant ballasts avec des moyens (28-31-32) pour introduire ou chasser l'eau de façon contrôlée de ces ballasts.

13. Une installation selon la revendication 9, caractérisée en ce que le flotteur longiligne rigide (1) est muni de lests amovibles (10).

*Fig:1*

*Fig:2*

0137087

2/3

Fig.3

Fig.4

Fig.5

Fig.6

0137087

Fig: 9

Fig: 7

Fig: 8

**0137087**

Numéro de la demande

**Office européen**
**des brevets**

**RAPPORT DE RECHERCHE EUROPEENNE**

EP 83 40 1996

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y,D | FR-A-2 111 180 (BAYER) <br> * En entier * | 1 | A 01 K 61/00 |
| | --- | | |
| Y | US-A-4 244 323 (MORIMURA) <br> * Colonne 1, lignes 10,12; colonne 2, lignes 37-53; colonne 9, lignes 23-34 * | 1 | |
| A | | 6 | |
| | --- | | |
| A | AU-A- 46 103 (KILIMNIK) <br> (1968) <br> * Pages 2-4; figures 1-3 * | 1,2 | |
| | --- | | |
| A | FR-A-1 176 245 (HUON) <br> * En entier * | 9 | |
| | ----- | | DOMAINES TECHNIQUES RECHERCHES (Int. Cl. 3) <br><br> A 01 K |

Le présent rapport de recherche a été établi pour toutes les revendications

| Lieu de la recherche <br> LA HAYE | Date d'achèvement de la recherche <br> 14-06-1984 | Examinateur <br> VILBIG K |
|---|---|---|